(19) Europäisches Patentamt
European Patent Office
Office européen des brevets

(11) Veröffentlichungsnummer : **0 479 075 B1**

(12) **EUROPÄISCHE PATENTSCHRIFT**

(45) Veröffentlichungstag der Patentschrift : **23.03.94 Patentblatt 94/12**

(51) Int. Cl.$^5$ : **C09D 15/00,** C08K 5/34, B27K 5/02, B27K 3/34

(21) Anmeldenummer : **91116085.1**

(22) Anmeldetag : **21.09.91**

(54) **Stabilisatoren enthaltende Holzbeizen.**

(30) Priorität : **04.10.90 DE 4031279**

(43) Veröffentlichungstag der Anmeldung : **08.04.92 Patentblatt 92/15**

(45) Bekanntmachung des Hinweises auf die Patenterteilung : **23.03.94 Patentblatt 94/12**

(84) Benannte Vertragsstaaten : **AT BE CH DE DK ES FR GB IT LI NL SE**

(56) Entgegenhaltungen :
**EP-A- 0 213 570**
**EP-A- 0 316 582**
**DE-A- 3 901 246**

(73) Patentinhaber : **BASF Aktiengesellschaft**
**Carl-Bosch-Strasse 38**
**D-67063 Ludwigshafen (DE)**

(72) Erfinder : **Trauth, Hubert**
**Milanstrasse 6**
**W-6724 Dudenhofen (DE)**
Erfinder : **Vamvakaris, Christos, Dr.**
**Riedweg 6**
**W-6701 Kallstadt (DE)**

**EP 0 479 075 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft Holzbeizen, die neben einem Farbmittel und einem Lösungsmittel mindestens einen Stabilisator gegen die Einwirkung von Licht, Sauerstoff und Wärme auf das mit den Holzbeizen behandelte Holz enthalten, welcher mindestens ein Strukturelement der Formel I

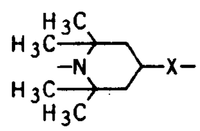

I

enthält, wobei X für Sauerstoff oder Stickstoff steht.

Unter Holzbeizen sind im erfindungsgemäßen Sinne in Anlehnung an Ullmanns Encyklopädie der technischen Chemie, 4. Auflage, Band 12, S. 681 (1) Zubereitungen von Farbstoffen und Farbpigmenten zu verstehen, die in einem organischen Lösungsmittel, vorzugsweise einem Alkohol, gelöst oder aufgeschlämmt vorliegen und geringe Mengen an üblichen Zusatzstoffen wie Bindemitteln enthalten können. Sie dienen zur Behandlung, speziell zur Einfärbung, von Holz.

Das mit diesen Holzbeizen behandelte Holz wird bekannterweise sehr schnell durch die Einwirkung von Licht, Sauerstoff und Wärme in unerwünschter Weise verändert oder sogar zerstört. Diese Veränderung bzw. Zerstörung zeigt sich üblicherweise in einer Vergilbung oder Verfärbung des an der Holzoberfläche oder im Holzinneren befindlichen Farbmittels. Bisher konnte kein zufriedenstellender Schutz hiergegen erzielt werden.

Aufgabe der vorliegenden Erfindung war es daher, Stabilisatoren bereitzustellen, die einen wirkungsvollen Schutz des behandelten Holzes gewährleisten.

Demgemäß wurden die eingangs definierten Stabilisatoren gefunden, welche mindestens ein Strukturelement der Formel I enthalten.

Polyalkylpiperidinyl-Gruppierungen der Formel I sind als wirksame Strukturelemente in Lichtschutzmitteln und Stabilisatoren für Kunststoffe und Lacke bekannt, beispielsweise aus der EP-A 316 582 (2) und der EP-A 213 570 (3). Um so überraschender war es, daß derartige Verbindungen auch beim Einsatz in Holzbeizen hervorragende stabilisierende Wirkungen beim hiermit behandelten Holz zeigen.

Die erfindungsgemäß einsetzbaren Stabilisatoren mit Strukturelementen der Formel I sind organisch-chemische Verbindungen, die auch in oligomerer oder polymerer Form vorliegen können. Sie müssen eine hinreichende Licht-, Wärme- und Lagerstabilität sowie eine ausreichende Verträglichkeit mit den Holzmaterialien aufweisen. Sie müssen weiterhin eine Mindestlöslichkeit in den für die Holzbeizen verwendeten Lösungsmitteln haben.

Als besonders vorteilhaft einsetzbare Stabilisatoren haben sich folgende Substanzklassen erwiesen:

(a) 4-Formylaminopiperidin-Derivate der allgemeinen Formel Ia

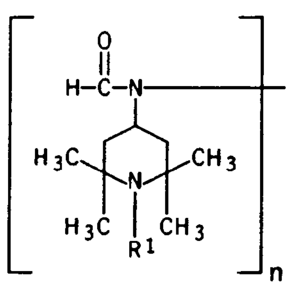

Ia

in der

n 1 oder 2

$R^1$ Wasserstoff, $C_1$- bis $C_4$-Alkyl, Allyl, Hydroxymethyl, β-Hydroxyethyl, $C_1$- bis $C_4$-Acyl, Benzoyl oder Benzyl und

für n = 1

Y $C_1$- bis $C_{18}$-Alkyl, das durch 1 bis 4 Stickstoff- oder Sauerstoffatome unterbrochen sein kann, $C_3$- bis $C_{12}$-Cycloalkyl, Phenyl, das unsubstituiert oder durch $C_1$- bis $C_4$-Alkyl, Fluor, Chlor, Brom, $C_1$- bis $C_4$-Alkoxy, Methylendioxy oder Di-$C_1$- bis $C_4$-alkylamino substituiert sein kann, einen Rest der Formel

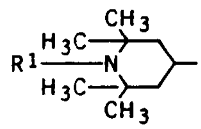

oder $C_7$- bis $C_{12}$-Phenylalkyl, das am Phenylkern zusätzlich durch $C_1$- bis $C_4$-Alkyl, Fluor, Chlor, Brom, $C_1$- bis $C_4$-Alkoxy, Methylendioxy oder Di-$C_1$- bis $C_4$-alkylamino substituiert sein kann, oder für n = 2

Y $C_2$- bis $C_8$-Alkylen, $C_5$- bis $C_{18}$-Cycloalkylen, Phenylen, $C_8$- bis $C_{15}$-Phenylalkylen oder durch 1 bis 4 Sauerstoff- oder Stickstoffatome unterbrochenes $C_4$- bis $C_{18}$-Alkylen bedeutet;

(b) Glykoluril-Derivate der allgemeinen Formel Ib

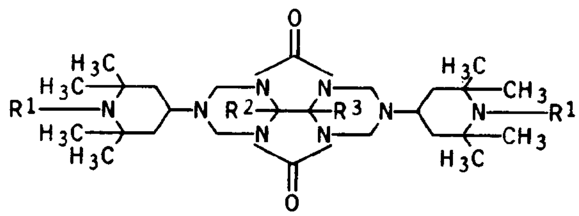

Ib

in der

$R^2$ und $R^3$ Wasserstoff, $C_1$- bis $C_4$-Alkyl, Carbomethoxy, Carboethoxy, Benzyl oder Phenyl bedeuten;

(c) Mono- oder Dicarbonsäureester der allgemeinen Formel Ic oder Id

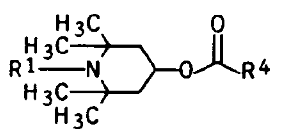

Ic

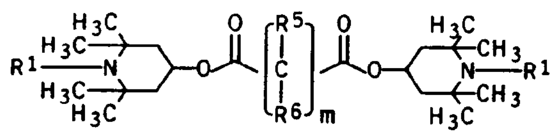

Id

in denen

$R^4$ $C_1$- bis $C_{18}$-Alkyl, das durch 1 bis 4 Stickstoff- oder Sauerstoffatome unterbrochen sein kann, $C_3$- bis $C_{12}$-Cycloalkyl, Phenyl, das unsubstituiert oder durch $C_1$- bis $C_4$-Alkyl, Fluor, Chlor, Brom, $C_1$- bis $C_4$-Alkoxy, Methylendioxy oder Di-$C_1$- bis $C_4$-alkylamino substituiert sein kann, oder $C_7$- bis $C_{12}$-Phenylalkyl, das am Phenylkern zusätzlich durch $C_1$- bis $C_4$-Alkyl, Fluor, Chlor, Brom, $C_1$- bis $C_4$-Alkoxy, Methylendioxy oder Di-$C_1$- bis $C_4$-alkylamino substituiert sein kann,

$R^5$ und $R^6$ Wasserstoff, $C_1$- bis $C_4$-Alkyl oder $C_7$- bis $C_{12}$-Phenylalkyl, wobei der Phenylrest zusätzlich durch $C_1$- bis $C_4$-Alkylgruppen, Chlor, Brom, Hydroxyl oder Cyano substituiert sein kann, und

m 1 bis 12 bedeuten,

und die Verbindungen Id in polymerer Form vorliegen können.

Für $R^1$ kommen z.B. Allyl, Hydroxymethyl, β-Hydroxyethyl, Formyl, Propionyl, Butyryl, Benzoyl, vor allem jedoch $C_1$- bis $C_4$-Alkyl wie Methyl, Ethyl, n-Propyl, iso-Propyl, n-Butyl oder iso-Butyl sowie Acetyl und Wasserstoff in Betracht. Am meisten bevorzugt werden Wasserstoff, Methyl und Acetyl.

$C_1$- bis $C_{18}$-Alkylreste für Y sind beispielsweise Methyl, Ethyl, n- und iso-Propyl, n- und iso-Butyl, n- und iso-Pentyl, Decyl, Dodecyl, iso-Tridecyl, Tetradecyl, Hexadecyl, Octadecyl, Pivalyl, 3,3-Dimethylbutyl-2, Neopentyl, 4-Methyl-pentyl-2 und vor allem n-Hexyl, n-Heptyl, n-Octyl, 2-Ethylhexyl, Nonyl und iso-Nonyl.

Durch 1 bis 4, vorzugsweise 1 bis 2 Ethersauerstoff- oder Stickstoffatome unterbrochenes $C_2$- bis $C_{18}$-Alkyl für Y kann beispielsweise sein:

$-(CH_2)_3N(CH_3)_2$, $-(CH_2)_3N(C_2H_5)_2$, $-(CH_2)_3-OCH_3$, $-(CH_2)_3-O-CH(CH_3)_2$, $-(CH_2)_2O(CH_2)_2-OH$, $-(CH_2)_4-N(CH_3)_2$, $-(CH_2)_2-N[CH(CH_3)_2]_2$, $-(CH_2)_2-N(C_2H_5)_2$, $-(CH_2)_2N(CH_3)_2$, $-(CH_2)_2OCH_3$ und $-(CH_2)_2OCH_2CH_3$.

Cycloalkylreste für Y sind beispielsweise Cyclopropyl, Cyclobutyl, Cyclopentyl, Methylcyclohexyl, Cycloheptyl, Cycloctyl, Cyclododecyl und vor allem Cyclohexyl.

Beispiele für ein- bis dreifach substituiertes Phenyl für Y sind Methoxyphenyl, Toluol, Xylol, Trimethylphenyl, Ethylphenyl, Cumyl, Fluorphenyl, Chlorphenyl, Bromphenyl, Methylendioxyphenyl und Dimethylaminophenyl, wobei die Substituenten in o-, m- oder p-Position stehen können.

Gegebenenfalls ein- bis dreifach am Phenylkern zusätzlich substituiertes $C_7$-$C_{12}$-Phenylalkyl für Y ist z.B. Benzyl, Methoxybenzyl, Methylbenzyl, Ethylbenzyl, Isopropylbenzyl, tert.-Butylbenzyl, Trimethylbenzyl, Fluorbenzyl, Chlorbenzyl, Brombenzyl, Methylendioxybenzyl, β-Phenylethyl, β-(tert.-Butylphenyl)ethyl, γ-Phenylpropyl, γ-(tert.-Butylphenyl)propyl, δ-Phenylbutyl, ω-Phenylhexyl oder Dimethylaminobenzyl, wobei Substituenten am Phenylkern in o-, m- oder p-Position stehen können.

$C_2$- bis $C_8$-Alkylen und $C_5$- bis $C_{18}$-Cycloalkylen für Y können beispielsweise sein:

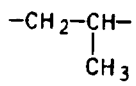 , 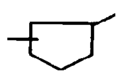 , 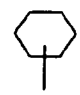 , 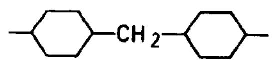 , 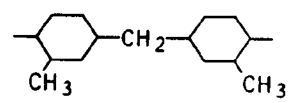 ,

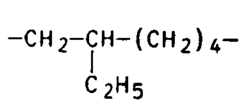 , 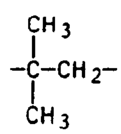 , 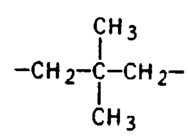

und $-(CH_2)_p-$ mit p = 2 bis 8.

Bevorzugt werden hiervon 1,2-Ethylen, 1,3-Propylen, 1,4-Butylen und 1,6-Hexamethylen.

Phenylen und $C_8$- bis $C_{15}$-Phenylalkylen für Y können beispielsweise sein:

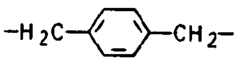 , 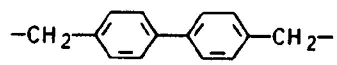 , 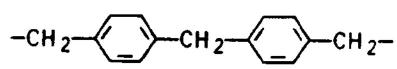 ,

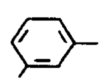

oder insbesondere

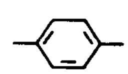 .

Durch 1 bis 4, vorzugsweise 1 bis 3 Ethersauerstoff- oder Stickstoffatome unterbrochenes $C_4$- bis $C_{18}$-Alkylen für Y kann beispielsweise sein:

$-(CH_2)_3O(CH_2)_4O(CH_2)_3-$, $-(CH_2)_3O(CH_2)_2O(CH_2)_3-$,

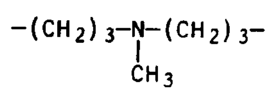 ,

$-(C_3H_6O)_2-C_3H_6-$,

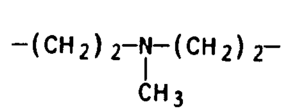 ,

$-(CH_2)_3O(CH_2)_2O(CH_2)_2O(CH_2)_3-$ oder

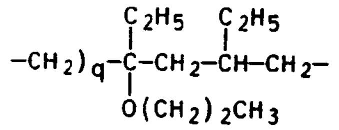

mit q = 1 bis 7

Enthält ein Stabilisatormolekül mehrere Polyalkylpiperidinyl-Gruppierungen, können die vorhandenen Reste $R^1$ gleich oder verschieden sein.

Die Reste $R^2$ und $R^3$ bezeichnen vorzugsweise Ethyl, Benzyl, Phenyl, Carbomethoxy, Carboethoxy und vor allem Wasserstoff und Methyl.

Der Rest $R^4$ weist die gleichen Bedeutungen wie für den monovalenten Rest Y auf, mit Ausnahme des Restes der Formel

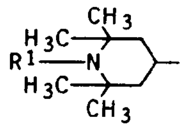

Beispiele für $R^5$ und $R^6$ sind neben Wasserstoff Methyl, Ethyl, n-Propyl, n-Butyl, Benzyl, β-Phenylethyl, p-Methylbenzyl, p-Chlorbenzyl, p-Brombenzyl, p-Cyanobenzyl, p-Hydroxybenzyl and 3,5-Di-tert.-butyl-4-hydroxybenzyl; bevorzugt werden n-Butyl, 3,5-Di-tert.-butyl-4-hydroxybenzyl und vor allem Wasserstoff.

Die Anzahl m der gegebenenfalls durch $R^5$ und $R^6$ substituierten Methylenbrückengliedern in den Dicarbonsäureestern Id beträgt vorzugsweise 1 bis 10, insbesondere 1 bis 8. Beim Auftreten von Substituenten ist vorzugsweise nur ein C-Atom der Alkylenbrücke hiermit ausgestattet; insbesondere können Substituenten dann auftreten, wenn m = 1 ist.

In einer bevorzugten Ausführungsform enthalten die Holzbeizen zusätzlich einen oder mehrere UV-Absorber aus den Klassen der 2-(2'-Hydroxyphenyl)-benztriazole, 2-(2'-Hydroxyphenyl)-1,3,5-triazine, 2-Hydroxybenzophenone, Imidazol-2-carbonsäureanilide, Oxalsäurediamide, in 3-Stellung phenyl- oder heteroarylsubstituierten Acrylate und der heterocyclischen Amidinderivate.

Als Beispiele für derartige UV-Absorber sind im einzelnen zu nennen:

- als 2-(2'-Hydroxyphenyl)benztriazole das 5'-Methyl-, 3', 5'-Di-tert.-butyl, 5'-tert.-Butyl-, 5'-(1",1",3",3"-Tetramethylbutyl)-, 5-Chlor-3',5'-di-tert.-butyl-, 5-Chlor-3'-tert.-butyl-5'-methyl-, 3'-sec.-Butyl-5'-tert.-butyl, 4'-Octoxy-, 3',5'-Di-tert.-amyl- und 3',5'-Bis-α,α-dimethylbenzyl-Derivat;
- als 2-(2'-Hydroxyphenyl)-1,3,5-triazine 2,4,6-Tris(2'-hydroxy-4'-octyloxyphenyl)-1,3,5-triazin, 2-(2'-Hydroxy-4'-octyloxyphenyl)-4,6-bis(2',4'-dimethylphenyl)-1,3,5-triazin, 2-(2',4'-Dihydroxyphenyl)-4,6-bis(2',4'-dimethylphenyl)-1,3,5-triazin, 2,4-Bis(2'-hydroxy-4'-propyloxyphenyl)-6-(2',4'-dimethylphenyl)-1,3,5-triazin, 2-(2'-Hydroxy-4'-octyloxyphenyl)-4,6-bis(4'-methylphenyl)-1,3,5-triazin, 2-(2'-Hydroxy-4'-dodecyloxyphenyl)-4,6-bis-(2',4-'dimethylphenyl)-1,3,5-triazin;
- als 2-Hydroxybenzophenone das 4-Hydroxy-, 4-Methoxy-, 4-Octyloxy-, 4-Decyloxy-, 4-Dodecyloxy-, 4-Benzyloxy-, 2,4,4'-Trihydroxy- und 2'-Hydroxy-4,4'-dimethoxy-Derivat;
- als Imidazol-2-carbonsäureanilide Benzimidazol-2-carbonsäureanilide, wie z.B. das 4'-Methoxy-, 4'-Ethoxy-, 4'-Propoxy-, 4'-Butoxy-, 4'-Methyl-, 4'-Ethyl-, 4'-Propyl-, 4'-Isopropyl-Derivat und die unsubstituierte Verbindung;
- als Oxalsäurediamide 4,4'-Di-octyloxy-oxanilid, 2,2'-Dioctyloxy-5,5'-di-tert.-butyl-oxanilid, 2,2'-Didodecyloxy-5,5'-di-tert.-butyl-oxanilid, 2-Ethoxy-2-ethyl-oxanilid, N,N'-Bis-(3-dimethylaminopropyl)-oxalamid, 2-Ethoxy-5-tert.-butyl-2-ethyloxanilid und dessen Gemisch mit 2-Ethoxy-2'-ethyl-5,4'-di-tert.-butyl-oxanilid, Gemische von o- und p-Methoxy- sowie von o- und p-Ethoxy-di-substituierten Oxaniliden;
- als in 3-Stellung phenyl- oder heteroarylsubstituierte Acrylate o-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxyzimtsäure-methylester, N-(β-Carbomethoxy-β-cyanovinyl)-2-methyl-indolin, 2-Ethylhexyl-2-cyan-3,3-diphenylacrylat und 2-Ethyl-2-cyan-3,3-diphenylacrylat;
- als heterocyclische Amidinderivate Verbindungen der Formeln

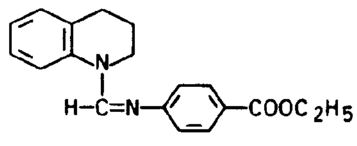 , 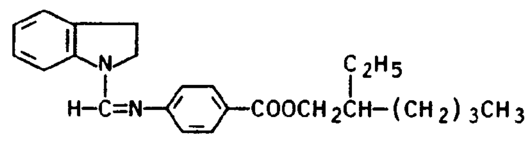

und

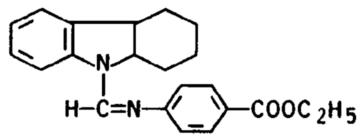

Imidazol-2-carbonsäureanilide des genannten Typs sind in der EP-A 284 828 (4) und heterocyclische Amidinderivate des genannten Typs in der älteren deutschen Patentanmeldung P 39 16 494 (5) näher beschrieben.

Bevorzugt werden von diesen UV-Absorbern Verbindungen aus den Klassen der 2-(2'-Hydroxyphenyl)benztriazole und insbesondere der 2-Hydroxybenzophenone und der Imidazol-2-carbonsäureanilide.

Die erfindungsgemäßen Holzbeizen enthalten als Farbmittel in den hierfür üblichen Mengen vorzugsweise einen Solventfarbstoff oder einen alkohollöslichen Säurefarbstoff, der seiner chemischen Konstitution nach ein Azo- oder Diazofarbstoff ist. Dieser Farbstoff kann auch ein Metallkomplex-Farbstoff sein. Gegebenenfalls kann er bei Vorhandensein von sauren Gruppen als Aminsalz vorliegen.

In der Regel liegen die Solventfarbstoffe und alkohollöslichen Säurefarbstoffe in den Holzbeizen vollständig oder nahezu vollständig gelöst vor.

Daneben können aber auch andere Farbmittel wie Dispersionsfarbstoffe oder Farbpigmente eingesetzt werden, wenn die geringere oder fehlende Löslichkeit des Farbmittels nicht zu anwendungstechnischen Problemen bei der Anwendung der erhaltenen Suspensionen führt.

Beispiele für gut einsetzbare Solventfarbstoffe oder alkohollösliche Säurefarbstoffe sind folgende im Colour Index verzeichnete Azo- bzw. Disazo-Farbstoffe: Solvent Yellow 82, Solvent Orange 54, Solvent Orange 56, Solvent Red 122, Solvent Red 160, Solvent Blue 70 und Acid Red 14.

Als Lösungsmittel für die erfindungsgemäßen Holzbeizen dienen polare organische Solventien wie Carbonsäuren, z.B. Ameisensäure, Essigsäure oder Propionsäure, wobei auch feste Carbonsäuren, z.B. Oxalsäure oder Maleinsäure, neben anderen Solventien mitverwendet werden können, Ester, z.B. Essigsäureethylester oder Buttersäuremethylester, Ketone, z.B. Aceton oder Butanon, Ether, z.B. Ethylenglykoldimethylether, Dioxan oder Tetrahydrofuran, Carbonsäureamide, z.B. Formamid oder Dimethylformamid, vor allem jedoch ein- oder mehrwertige aliphatische Alkohole, die zusätzlich Ethersauerstoffatome enthalten können, z.B. Methanol, Ethanol, Isopropanol, n-Propanol, n-Butanol, 1-Methoxy-2-propanol, Ethylenglykol, Ethylenglykolmonomethylether oder Diethylenglykolmonomethylether sowie Mischungen der genannten Verbindungen. Besonders bevorzugt werden Ethanol, Isopropanol und 1-Methoxy-2-propanol sowie Gemische hieraus. Weiterhin kann als polares Lösungsmittel auch Wasser mitverwendet werden, etwa bis zu einem Anteil von ca. 50 Gew.-%, bezogen auf das Lösungsmittelgemisch, unter der Voraussetzung, daß eine Mindestlöslichkeit für das Farbmittel und gegebenenfalls das Stabilisatorsystem gewährleistet bleibt.

Die erfindungsgemäßen Holzbeizen enthalten die beschriebenen Stabilisatoren allein oder eine Mischung aus den beschriebenen Stabilisatoren und den genannten UV-Absorbern in einer Menge von 0,05 bis 10 Gew.-%, vorzugsweise 0,1 bis 5 Gew.-%, insbesondere 0,2 bis 2,5 Gew.-%, bezogen auf die Gesamtmenge der Holzbeize.

Unter Holz, das mit den erfindungsgemäßen Holzbeizen behandelt werden kann, sind in erster Linie Holzformkörper mit ausgedehnten Oberflächen, z.B. Holzbretter, Sperrholz und Spanplatten, welche furniert sein können, geschnitzte Holzgegenstände sowie zu beispielsweise Möbeln zusammengeleimte, -genagelte oder -geschraubte Holzteile, zu verstehen, daneben aber auch Holz in feinverteilter Form, z.B. Holzspäne oder Sägemehl. Je nach Beschaffenheit und Sorte des Holzes sowie den Einwirkbedingungen der Holzbeize kann sich das Farbmittel direkt an der Oberfläche des Holzmaterials befinden oder tiefer ins Holzinnere eindringen.

Das Aufbringen der erfindungsgemäßen Holzbeizen auf das Holz geschieht nach den üblichen Methoden, beispielsweise durch Eintauchen des Holzes in Bäder der Holzbeizen. Die Einwirkungsdauer kann hierbei bis zu mehreren Stunden betragen, hierbei liegt die Temperatur der Holzbeizen-Bäder in der Regel zwischen ca. 20 und ca. 100°C je nach verwendetem Lösungsmittelsystem.

Nach Beendung der Behandlung werden die Holzgegenstände in der Regel an der Luft bei Raumtemperatur getrocknet; es können aber auch drastischere Trocknungsmethoden angewandt werden, beispielsweise bei erhöhten Temperaturen in einem Umluft-Trockenschrank.

Mit den erfindungsgemäßen Holzbeizen können alle üblichen Holzsorten wie z.B. Kiefer, Fichte, Tanne, Eiche, Esche, Buche, Ahorn, Nußbaum, Birnbaum, Teakholz, Mahagoni, Kastanie, Birke, Lärche, Haselnuß, Linde, Weide, Pappel, Ulme, Föhre, Platane oder Espe behandelt werden.

Gegenstand der vorliegenden Anmeldung ist weiterhin ein Gemisch aus Stabilisatoren mit mindestens einer Polyalkylpiperidinyl-Gruppierung der Formel I und UV-Absorbern der genannten Typen im Gewichtsverhältnis von 5:1 bis 1:5, vorzugsweise 2:1 bis 1:2, insbesondere 1:1, zum Stabilisieren von mit Holzbeizen behandeltem Holz gegen die Einwirkung von Licht, Sauerstoff und Wärme.

Dieses Gemisch wird vorzugsweise den Holzbeizen vor der Behandlung des Holzes zugesetzt, so daß das Stabilisatorsystem dann zusammen mit dem Farbmittel appliziert werden kann, was eine regelmäßige Verteilung der Stabilisatorkomponenten neben dem Farbmittel garantiert. Man kann aber auch das Holz mit dem erfindungsgemäßen Gemisch aus Stabilisatoren und UV-Absorbern, vorteilhafterweise in gelöster Form, vor oder nach der Behandlung mit der Holzbeize separat in Kontakt bringen, um so eine schichtartige Verteilung herbeizuführen.

Die erfindungsgemäßen Holzbeizen, insbesondere diejenigen, welche eine Mischung aus den beschriebenen Stabilisatoren und UV-Absorbern enthalten, eignen sich in hervorragender Weise, um Holz jeglicher Beschaffenheit und Sorte dauerhaft einzufärben. Das so behandelte Holz vergilbt oder verfärbt sich praktisch nicht, wie die entsprechenden Lichtechtheitsmessungen belegen.

Beispiele

Die verwendeten Holzbeizen wurden nach folgender Vorschrift hergestellt:

1 g des in der Tabelle angegebenen Farbstoffes wurde in einer Mischung aus 630 g Ethanol und 185 g 1-Methoxy-2-propanol unter leichtem Erwärmen gelöst. Zu dieser Lösung wurden dann bei Raumtemperatur die in der Tabelle angegebenen Mengen an Stabilisatoren und UV-Absorbern hinzugefügt. Die Stabilisatoren und UV-Absorbern lösten sich vollständig auf.

Folgende Stabilisatoren (A bis C) und UV-Absorber (D bis H) wurden eingesetzt:

A 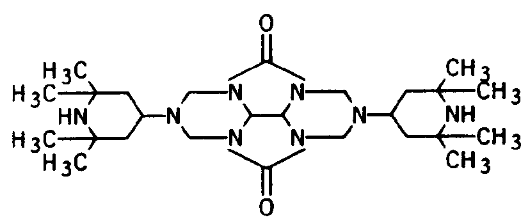

B 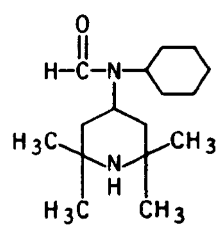

C 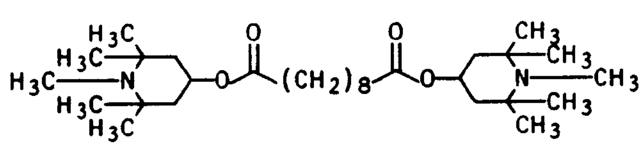

D

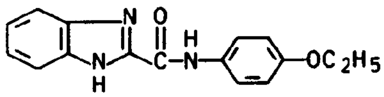

E

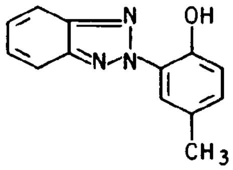

F

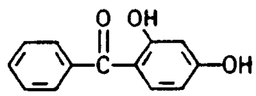

G

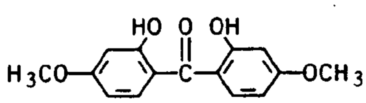

H

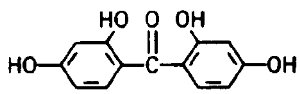

Die Färbung des Holzes erfolgte nach folgender Vorschrift:

Handelsübliche furnierte Holzplatten wurden in ein Bad der Holzbeize eingetaucht und zur Vermeidung von Verdunstungsverlusten in einem geschlossenen Gefäß 4 Stunden bei 70 - 75°C dessen Einwirkung ausgesetzt. Anschließend wurden die Holzplatten an der Luft bei Raumtemperatur getrocknet.

Die gefärbten Holzplatten wurden im Schnellbelichtungsgerät Suntest® der Fa. Heraeus 96 Stunden belichtet. Danach wurden die Lichtechtheiten der gefärbten Holzoberflächen bestimmt. Als Vergleich wurden furnierte Holzplatten analog mit den entsprechenden Holzbeizen ohne Stabilisatoren und UV-Absorber behandelt und anschließend belichtet.

Die Lichtechtheit gibt an, in welchem Grad das Farbmittel nach Belichten mit künstlichem Licht verändert wird. Die Lichtechtheit wird in Noten von 1 bis 8 angegeben, wobei 1 die schlechteste und 8 die beste Note darstellt. Bei einer Lichtechtheit von 8 ist die Farbstärke des Farbmittels unverändert, bei 1 ist das Farbmittel praktisch vollständig zerstört.

Die folgende Tabelle zeigt die Ergebnisse der Versuche.

Tabelle
Lichtechtheiten von gefärbten furnierten Holzplatten

| Beispiel Nr. | Stabilisator/ UV-Absorber | Menge [g] | Konzentration [Gew.-%] | Farbstoff | Lichtechtheit Note |
|---|---|---|---|---|---|
| 1 | A | 2,5 | 0,3 | Solvent Red 122 | 3 - 4 |
| 2 | A<br>D | 5<br>5 | 1,2 | Solvent Red 122 | 4 - 5 |
| 3 | A<br>F | 10<br>10 | 2,4 | Solvent Red 122 | 5 |
| 4 | A<br>G | 5<br>5 | 1,2 | Solvent Red 122 | 4 |
| 5 | A<br>H | 5<br>5 | 1,2 | Solvent Red 122 | 3 - 4 |
| 6 | B<br>D | 5<br>5 | 1,2 | Solvent Red 122 | 5 |
| 7 | B<br>F | 5<br>5 | 1,2 | Solvent Red 122 | 4 - 5 |
| Vergleich | - | - | - | Solvent Red 122 | 1 - 2 |
| 8 | A<br>F | 10<br>10 | 2,4 | Solvent Red 160 | 4 |
| Vergleich | - | - | - | Solvent Red 160 | 1 |
| 9 | A<br>F | 10<br>10 | 2,4 | Solvent Yellow 82 | 3 |
| Vergleich | - | - | - | Solvent Yellow 82 | 1 - 2 |
| 10 | A<br>F | 10<br>10 | 2,4 | Solvent Orange 54 | 3 - 4 |
| Vergleich | - | - | - | Solvent Orange 54 | 2 - 3 |

Tabelle (Fortsetzung)
Lichtechtheiten von gefärbten furnierten Holzplatten

| Beispiel Nr. | Stabilisator/ UV-Absorber | Menge [g] | | Konzentration [Gew.-%] | Farbstoff | Lichtechtheit Note |
|---|---|---|---|---|---|---|
| 11 | A | 10 | ) | 2,4 | Solvent Orange 56 | 3 |
| | F | 10 | ) | | | |
| 12 | C | 10 | ) | 2,4 | Solvent Orange 56 | 3 - 4 |
| | E | 10 | ) | | | |
| Vergleich | - | - | | - | Solvent Orange 56 | 2 |
| 13 | C | 10 | ) | 2,4 | Solvent Blue 70 | 2 - 3 |
| | E | 10 | ) | | | |
| Vergleich | - | - | | - | Solvent Blue 70 | 2 |
| 14 | A | 5 | ) | 0,6 | Acid Red 14 | 3 |
| 15 | A | 5 | ) | 1,2 | Acid Red 14 | 3 - 4 |
| | D | 5 | ) | | | |
| 16 | A | 5 | ) | 1,2 | Acid Red 14 | 3 - 4 |
| | G | 5 | ) | | | |
| 17 | A | 5 | ) | 1,2 | Acid Red 14 | 3 - 4 |
| | H | 5 | ) | | | |
| 18 | B | 5 | ) | 1,2 | Acid Red 14 | 3 - 4 |
| | D | 5 | ) | | | |
| 19 | B | 5 | ) | 1,2 | Acid Red 14 | 3 - 4 |
| | F | 5 | ) | | | |
| Vergleich | - | - | | - | Acid Red 14 | 1 |

## Patentansprüche

**Patentansprüche für folgende Vertragsstaaten : AT, BE, CH, DE, DK, FR, GB, IT, LI, NL, SE**

1. Holzbeizen, enthaltend neben einem Farbmittel und einem Lösungsmittel mindestens einen Stabilisator gegen die Einwirkung von Licht, Sauerstoff und Wärme auf das mit den Holzbeizen behandelte Holz, welcher mindestens ein Strukturelement der Formel I

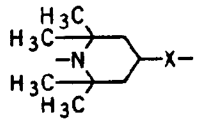

I

enthält, wobei X für Sauerstoff oder Stickstoff steht.

**2.** Holzbeizen nach Anspruch 1, welche als Stabilisatoren
(a) 4-Formylaminopiperidin-Derivate der allgemeinen Formel Ia

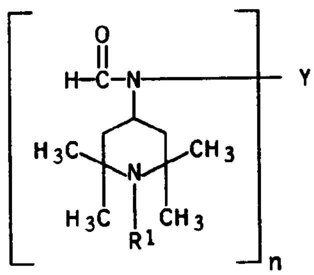

Ia

in der

n 1 oder 2

$R^1$ Wasserstoff, $C_1$- bis $C_4$-Alkyl, Allyl, Hydroxymethyl, β-Hydroxyethyl, $C_1$- bis $C_4$-Acyl, Benzoyl oder Benzyl und

für n = 1

Y $C_1$- bis $C_{18}$-Alkyl, das durch 1 bis 4 Stickstoff- oder Sauerstoffatome unterbrochen sein kann, $C_3$- bis $C_{12}$-Cycloalkyl, Phenyl, das unsubstituiert oder durch $C_1$- bis $C_4$-Alkyl, Fluor, Chlor, Brom, $C_1$- bis $C_4$-Alkoxy, Methylendioxy oder Di-$C_1$- bis $C_4$-alkylamino substituiert sein kann, einen Rest der Formel

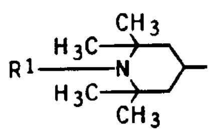

oder $C_7$- bis $C_{12}$-Phenylalkyl, das am Phenylkern zusätzlich durch $C_1$- bis $C_4$-Alkyl, Fluor, Chlor, Brom, $C_1$- bis $C_4$-Alkoxy, Methylendioxy oder Di-$C_1$- bis $C_4$-alkylamino substituiert sein kann, oder

für n = 2

Y $C_2$- bis $C_8$-Alkylen, $C_5$- bis $C_{18}$-Cycloalkylen, Phenylen, $C_8$- bis $C_{15}$-Phenylalkylen oder durch 1 bis 4 Sauerstoff- oder Stickstoffatome unterbrochenes $C_4$- bis $C_{18}$-Alkylen bedeutet,

oder

(b) Glykoluril-Derivate der allgemeinen Formel Ib

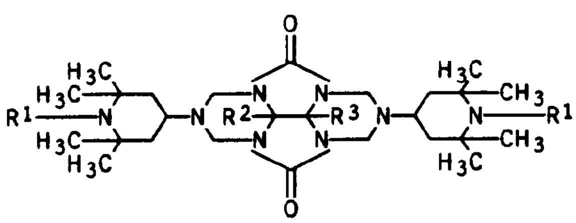

Ib

in der

$R^2$ und $R^3$ Wasserstoff, $C_1$- bis $C_4$-Alkyl, Carbomethoxy, Carboethoxy, Benzyl oder Phenyl bedeuten,

oder

(c) Mono- oder Dicarbonsäureester der allgemeinen Formel Ic oder Id

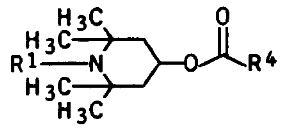

Ic

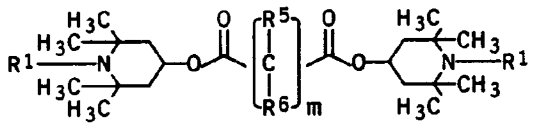

Id

in denen

$R^4$ $C_1$- bis $C_{18}$-Alkyl, das durch 1 bis 4 Stickstoff- oder Sauerstoffatome unterbrochen sein kann, $C_3$- bis $C_{12}$-Cycloalkyl, Phenyl, das unsubstituiert oder durch $C_1$- bis $C_4$-Alkyl, Fluor, Chlor, Brom, $C_1$- bis $C_4$-Alkoxy, Methylendioxy oder Di-$C_1$- bis $C_4$-alkylamino substituiert sein kann, oder $C_7$- bis $C_{12}$-Phenylalkyl, das am Phenylkern zusätzlich durch $C_1$- bis $C_4$-Alkyl, Fluor, Chlor, Brom, $C_1$- bis $C_4$-Alkoxy, Methylendioxy oder Di-$C_1$- bis $C_4$-alkylamino substituiert sein kann,

$R^5$ und $R^6$ Wasserstoff, $C_1$- bis $C_4$-Alkyl oder $C_7$- bis $C_{12}$-Phenylalkyl, wobei der Phenylrest zusätzlich durch $C_1$- bis $C_4$-Alkylgruppen, Chlor, Brom, Hydroxyl oder Cyano substituiert sein kann, und

m 1 bis 12 bedeuten,

und die Verbindungen Id in polymerer Form vorliegen können,

enthalten.

3. Holzbeizen nach Anspruch 1 oder 2, welche zusätzlich einen oder mehrere UV-Absorber aus den Klassen der 2-(2'-Hydroxyphenyl)-benztriazole, 2-(2'-Hydroxyphenyl)-1,3,5-triazine, 2-Hydroxybenzophenone, Imidazol-2-carbonsäureanilide, Oxalsäurediamide, in 3-Stellung phenyl- oder heteroaryl-substituierten Acrylate und der heterocyclischen Amidinderivate enthalten.

4. Holzbeizen nach den Ansprüchen 1 bis 3, welche als Farbmittel einen Solventfarbstoff oder einen alkohollöslichen Säurefarbstoff jeweils aus der Gruppe der Azo- oder Disazofarbstoffe enthalten.

5. Holzbeizen nach den Ansprüchen 1 bis 4, welche die Stabilisatoren allein oder eine Mischung aus den Stabilisatoren und den UV-Absorbern gemäß Anspruch 3 in einer Menge von 0,05 bis 10 Gew.-%, bezogen auf die Gesamtmenge der Holzbeize, enthalten.

6. Gemisch aus Stabilisatoren gemäß Anspruch 1 und UV-Absorbern gemäß Anspruch 3 im Gewichtsverhältnis von 5:1 bis 1:5 zum Stabilisieren von mit Holzbeizen behandeltem Holz gegen die Einwirkung von Licht, Sauerstoff und Wärme.

**Patentansprüche für folgenden Vertragsstaat : ES**

1. Verfahren zum Stabilisieren von Holz gegen die Einwirkung von Licht, Sauerstoff und Wärme, dadurch gekennzeichnet, daß man das Holz mit Holzbeizen behandelt, die neben einem Farbmittel und einem Lösungsmittel mindestens einen Stabilisator gegen die Einwirkung von Licht, Sauerstoff und Wärme auf das mit den Holzbeizen behandelte Holz enthalten, welcher mindestens ein Strukturelement der Formel I

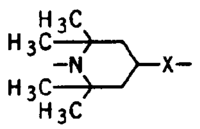

I

enthält, wobei X für Sauerstoff oder Stickstoff steht.

2. Verfahren nach Anspruch 1, wobei als Stabilisatoren
(a) 4-Formylaminopiperidin-Derivate der allgemeinen Formel Ia

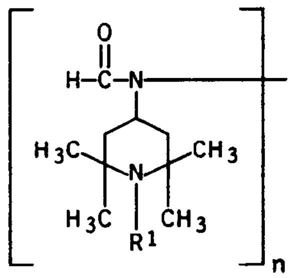

Ia

in der

n 1 oder 2

$R^1$ Wasserstoff, $C_1$- bis $C_4$-Alkyl, Allyl, Hydroxymethyl, β-Hydroxyethyl, $C_1$- bis $C_4$-Acyl, Benzoyl oder Benzyl und

für n = 1

Y $C_1$- bis $C_{18}$-Alkyl, das durch 1 bis 4 Stickstoff- oder Sauerstoffatome unterbrochen sein kann, $C_3$- bis $C_{12}$-Cycloalkyl, Phenyl, das unsubstituiert oder durch $C_1$- bis $C_4$-Alkyl, Fluor, Chlor, Brom, $C_1$- bis $C_4$-Alkoxy, Methylendioxy oder Di-$C_1$- bis $C_4$-alkylamino substituiert sein kann, einen Rest der Formel

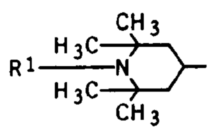

oder $C_7$- bis $C_{12}$-Phenylalkyl, das am Phenylkern zusätzlich durch $C_1$- bis $C_4$-Alkyl, Fluor, Chlor, Brom, $C_1$- bis $C_4$-Alkoxy, Methylendioxy oder Di-$C_1$- bis $C_4$-alkylamino substituiert sein kann, oder

für n = 2

Y $C_2$- bis $C_8$-Alkylen, $C_5$- bis $C_{18}$-Cycloalkylen, Phenylen, $C_8$- bis $C_{15}$-Phenylalkylen oder durch 1 bis 4 Sauerstoff- oder Stickstoffatome unterbrochenes $C_4$- bis $C_{18}$-Alkylen bedeutet,

oder

(b) Glykoluril-Derivate der allgemeinen Formel Ib

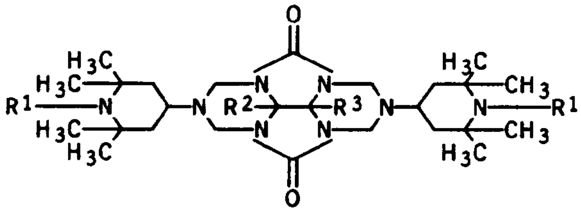

Ib

in der

$R^2$ und $R^3$ Wasserstoff, $C_1$- bis $C_4$-Alkyl, Carbomethoxy, Carboethoxy, Benzyl oder Phenyl bedeuten,

oder

(c) Mono- oder Dicarbonsäureester der allgemeinen Formel Ic oder Id

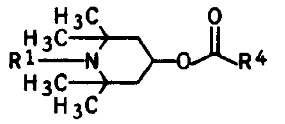

Ic

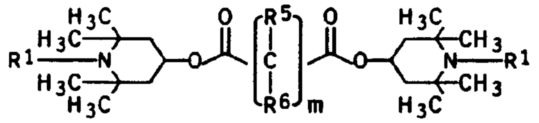

Id

in denen

$R^4$ $C_1$- bis $C_{18}$-Alkyl, das durch 1 bis 4 Stickstoff- oder Sauerstoffatome unterbrochen sein kann, $C_3$- bis $C_{12}$-Cycloalkyl, Phenyl, das unsubstituiert oder durch $C_1$- bis $C_4$-Alkyl, Fluor, Chlor, Brom, $C_1$- bis $C_4$-Alkoxy, Methylendioxy oder Di-$C_1$- bis $C_4$-alkylamino substituiert sein kann, oder $C_7$- bis $C_{12}$-Phenylalkyl, das am Phenylkern zusätzlich durch $C_1$- bis $C_4$-Alkyl, Fluor, Chlor, Brom, $C_1$- bis $C_4$-Alkoxy, Methylendioxy oder Di-$C_1$- bis $C_4$-alkylamino substituiert sein kann,

$R^5$ und $R^6$ Wasserstoff, $C_1$- bis $C_4$-Alkyl oder $C_7$- bis $C_{12}$-Phenylalkyl, wobei der Phenylrest zusätzlich durch $C_1$- bis $C_4$-Alkylgruppen, Chlor, Brom, Hydroxyl oder Cyano substituiert sein kann, und

m 1 bis 12 bedeuten,

und die Verbindungen Id in polymerer Form vorliegen können,

eingesetzt werden.

3. Verfahren nach Anspruch 1 oder 2, wobei zusätzlich ein oder mehrere UV-Absorber aus den Klassen der 2-(2'-Hydroxyphenyl)benztriazole, 2-(2'-Hydroxyphenyl)-1,3,5-triazine, 2-Hydroxybenzophenone, Imidazol-2-carbonsäureanilide, Oxalsäurediamide, in 3-Stellung phenyl- oder heteroaryl-substituierten Acrylate und der heterocyclischen Amidinderivate eingesetzt werden.

4. Verfahren nach den Ansprüchen 1 bis 3, wobei als Farbmittel ein Solventfarbstoff oder ein alkohollöslicher Säurefarbstoff jeweils aus der Gruppe der Azo- oder Disazofarbstoffe eingesetzt wird.

5. Verfahren nach den Ansprüchen 1 bis 4, wobei die Stabilisatoren allein oder eine Mischung aus den Stabilisatoren und den UV-Absorbern gemäß Anspruch 3 in einer Menge von 0,05 bis 10 Gew.-%, bezogen auf die Gesamtmenge der Holzbeize, eingesetzt werden.

6. Verfahren nach Anspruch 1, wobei ein Gemisch aus den Stabilisatoren und den UV-Absorbern gemäß Anspruch 3 im Gewichtsverhältnis von 5:1 bis 1:5 eingesetzt wird.

## Claims

### Claims for the following Contracting States : AT, BE, CH, DE, DK, FR, GB, IT, LI, NL, SE

1. A wood stain containing in addition to a colorant and a solvent at least one stabilizer against the action of light, oxygen and heat on the wood which has been treated with the wood stain, said stabilizer containing at least one structural element of the formula I

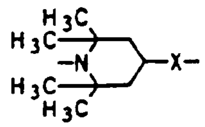

I

where X is oxygen or nitrogen.

2. A wood stain as claimed in claim 1, wherein the stabilizer is
(a) a 4-formylaminopiperidine derivative of the formula Ia

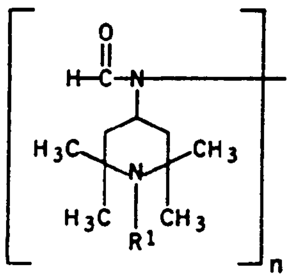

Ia

where

n is 1 or 2,

$R^1$ is hydrogen, $C_1$-$C_4$-alkyl, allyl, hydroxymethyl, β-hydroxyethyl, $C_1$-$C_4$-acyl, benzoyl or benzyl, and

for n = 1

Y is $C_1$-$C_{18}$-alkyl, which may be interrupted by from 1 to 4 nitrogen or oxygen atoms, $C_3$-$C_{12}$-cycloalkyl, phenyl, which may be $C_1$-$C_4$-alkyl-, fluorine-, chlorine-, bromine-, $C_1$-$C_4$-alkoxy-, methylenedioxy- or di-$C_1$-$C_4$-alkylamino-substituted, a radical of the formula

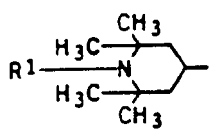

or $C_7$-$C_{12}$-phenylalkyl which may be additionally substituted on the phenyl nucleus by $C_1$-$C_4$-alkyl, fluorine, chlorine, bromine, $C_1$-$C_4$-alkoxy, methylenedioxy or di-$C_1$-$C_4$-alkylamino, or

for n = 2

Y is $C_2$-$C_8$-alkylene, $C_5$-$C_{18}$-cycloalkylene, phenylene, $C_8$-$C_{15}$-phenylalkylene or $C_4$-$C_{18}$-alkylene which is interrupted by from 1 to 4 oxygen or nitrogen atoms,

or

(b) a glycoluril derivative of the formula Ib

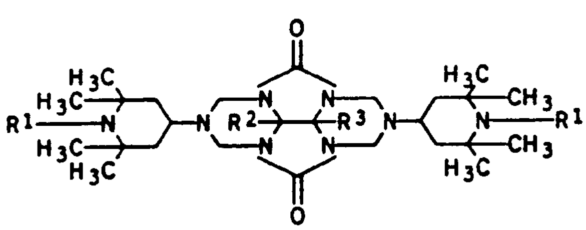

Ib

where

$R^2$ and $R^3$ are each hydrogen, $C_1$-$C_4$-alkyl, carbomethoxy, carboethoxy, benzyl or phenyl,

or

(c) a mono- or dicarboxylic ester of the formula Ic or Id

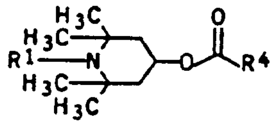

Ic

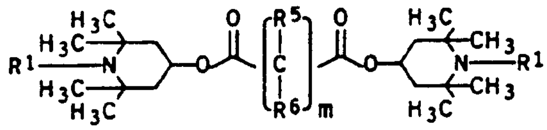

Id

where

$R^4$ is $C_1$-$C_{18}$-alkyl which may be interrupted by from 1 to 4 nitrogen or oxygen atoms, $C_3$-$C_{12}$-cycloalkyl, phenyl which may be $C_1$-$C_4$-alkyl-, fluorine-, chlorine-, bromine-, $C_1$-$C_4$-alkoxy-, methylenedioxy- or di-$C_1$-$C_4$-alkylamino-substituted, or $C_7$-$C_{12}$-phenylalkyl which may be additionally substituted on the phenyl nucleus by $C_1$-$C_4$-alkyl, fluorine, chlorine, bromine, $C_1$-$C_4$-alkoxy, methylenedioxy or di-$C_1$-$C_4$-alkylamino,

$R^5$ and $R^6$ are each hydrogen, $C_1$-$C_4$-alkyl or $C_7$-$C_{12}$-phenylalkyl which may be additionally substituted on the phenyl moiety by $C_1$-$C_4$-alkyl, chlorine, bromine, hydroxyl or cyano, and

m is from 1 to 12,

and compound Id may be in the form of a polymer.

3. A wood stain as claimed in claim 1 or 2, additionally containing one or more UV absorbers selected from the classes of the 2-(2'-hydroxyphenyl)benzotriazoles, 2-(2'-hydroxyphenyl)-1,3,5-triazines, 2-hydroxybenzophenones, imidazole-2-carboxanilides, oxalodiamides, acrylates which are phenyl- or hetaryl-substituted in the 3-position, and the heterocyclic amidine derivatives.

4. A wood stain as claimed in claim 1 or 2 or 3, wherein the colorant is a solvent dye or an alcohol-soluble acid dye, in either case from the group of the azo or disazo dyes.

5. A wood stain as claimed in claim 1 or 2 or 3 or 4, containing the stabilizer alone or a mixture of stabilizers and UV absorbers as set forth in claim 3 in an amount of from 0.05 to 10% by weight, based on the total amount of wood stain.

6. A mixture of stabilizers as set forth in claim 1 and UV absorbers as set forth in claim 3 in a weight ratio of from 5:1 to 1:5 for stabilizing wood which has been treated with a wood stain against the action of light, oxygen and heat.

**Claims for the following Contracting State : ES**

1. A method of stabilizing wood against the action of light, oxygen and heat, which comprises the wood with a wood stain containing in addition to a colorant and a solvent at least one stabilizer against the action of light, oxygen and heat on the wood which has been treated with the wood stain, said stabilizer containing at least one structural element of the formula I

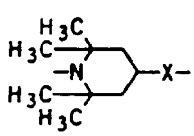

I

where X is oxygen or nitrogen.

2. The method of claim 1, wherein the stabilizer is
(a) a 4-formylaminopiperidine derivative of the formula Ia

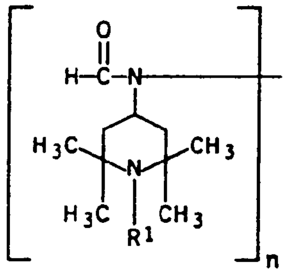

Ia

where

n is 1 or 2,

$R^1$ is hydrogen, $C_1$-$C_4$-alkyl, allyl, hydroxymethyl, β-hydroxyethyl, $C_1$-$C_4$-acyl, benzoyl or benzyl, and

for n = 1

Y is $C_1$-$C_{18}$-alkyl, which may be interrupted by from 1 to 4 nitrogen or oxygen atoms, $C_3$-$C_{12}$-cycloalkyl, phenyl, which may be $C_1$-$C_4$-alkyl-, fluorine-, chlorine-, bromine-, $C_1$-$C_4$-alkoxy-, methylenedioxy- or di-$C_1$-$C_4$-alkylamino-substituted, a radical of the formula

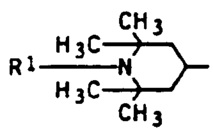

or $C_7$-$C_{12}$-phenylalkyl which may be additionally substituted on the phenyl nucleus by $C_1$-$C_4$-alkyl, fluorine, chlorine, bromine, $C_1$-$C_4$-alkoxy, methylenedioxy or di-$C_1$-$C_4$-alkylamino, or

for n = 2

Y is $C_2$-$C_8$-alkylene, $C_5$-$C_{18}$-cycloalkylene, phenylene, $C_8$-$C_{15}$-phenylalkylene or $C_4$-$C_{18}$-alkylene which is interrupted by from 1 to 4 oxygen or nitrogen atoms,

or

(b) a glycoluril derivative of the formula Ib

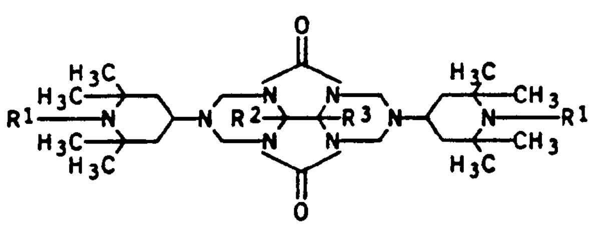

Ib

where

$R^2$ and $R^3$ are each hydrogen, $C_1$-$C_4$-alkyl, carbomethoxy, carboethoxy, benzyl or phenyl,

or

(c) a mono- or dicarboxylic ester of the formula Ic or Id

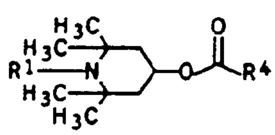

Ic

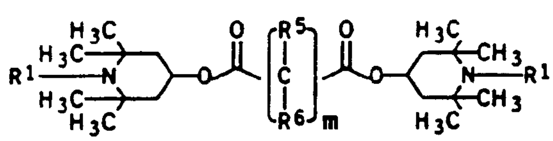

Id

where

R⁴ is $C_1$-$C_{18}$-alkyl which may be interrupted by from 1 to 4 nitrogen or oxygen atoms, $C_3$-$C_{12}$-cycloalkyl, phenyl which may be $C_1$-$C_4$-alkyl-, fluorine-, chlorine-, bromine-, $C_1$-$C_4$-alkoxy-, methylenedioxy- or di-$C_1$-$C_4$-alkylamino-substituted, or $C_7$-$C_{12}$-phenylalkyl which may be additionally substituted on the phenyl nucleus by $C_1$-$C_4$-alkyl, fluorine, chlorine, bromine, $C_1$-$C_4$-alkoxy, methylenedioxy or di-$C_1$-$C_4$-alkylamino,

$R^5$ and $R^6$ are each hydrogen, $C_1$-$C_4$-alkyl or $C_7$-$C_{12}$-phenylalkyl which may be additionally substituted on the phenyl moiety by $C_1$-$C_4$-alkyl, chlorine, bromine, hydroxyl or cyano, and

m is from 1 to 12,

and compound Id may be in the form of a polymer.

3. The method of claim 1 or 2, wherein in addition one or more UV absorbers selected from the classes of the 2-(2'-hydroxyphenyl)benzotriazoles, 2-(2'-hydroxyphenyl)-1,3,5-triazines, 2-hydroxybenzophenones, imidazole-2-carboxanilides, oxalodiamides, acrylates which are phenyl- or hetaryl-substituted in the 3-position, and the heterocyclic amidine derivatives are used.

4. The method of claim 1 or 2 or 3, wherein the colorant used is a solvent dye or an alcohol-soluble acid dye, in either case from the group of the azo or disazo dyes.

5. The method of claim 1 or 2 or 3 or 4, wherein the stabilizers are used alone or a mixture of stabilizers and UV absorbers as set forth in claim 3 in an amount of from 0.05 to 10% by weight, based on the total amount of wood stain.

6. The method of claim 1, wherein a mixture of stabilizers and UV absorbers as set forth in claim 3 in a weight ratio of from 5:1 to 1:5 is used.

## Revendications

### Revendications pour les Etats contractants suivants : AT, BE, CH, DE, DK, FR, GB, IT, LI, NL, SE

1. Teinture à bois contenant, outre un colorant et un solvant, au moins un stabilisateur contre l'action de la lumière, de l'oxygène et de la chaleur sur le bois traité par la teinture à bois, qui contient au moins un élément de structure de la formule I

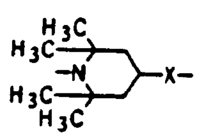

I

dans laquelle X représente un atome d'oxygène ou d'azote.

2. Teintures à bois suivant la revendication 1, qui contiennent, à titre de stabilisateurs,
(a) des dérivés de la 4-formylaminopipéridine de la formule générale Ia

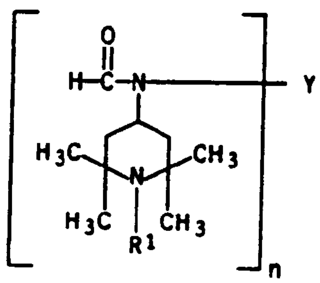

Ia

dans laquelle

n est égal à 1 ou à 2,

$R^1$ représente un atome d'hydrogène, un radical alkyle en $C_1$-$C_4$, allyle, hydroxyméthyle, β-hydroxyéthyle, acyle en $C_1$-$C_4$, benzoyle ou benzyle et

au cas où n est égal à 1,

Y représente un radical alkyle en $C_1$-$C_{18}$, qui peut être interrompu par de 1 à 4 atomes d'azote ou d'oxygène, un radical cycloalkyle en $C_3$-$C_{12}$, un radical phényle qui peut ne pas être substitué ou être substitué par des atomes de fluor, de chlore, de brome, des radicaux alkyle en $C_1$-$C_4$, alcoxy en $C_1$-$C_4$, méthylènedioxy ou di-alkyl($C_1$-$C_4$)-amino, un reste de la formule

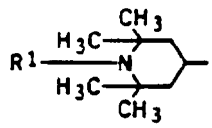

ou un radical alkylphényle en $C_7$-$C_{12}$, qui peut complémentairement être substitué sur le noyau phényle par des atomes de fluor, de chlore, de brome, des radicaux alkyle en $C_1$-$C_4$, alcoxy en $C_1$-$C_4$, méthylènedioxy, ou di-alkyl($C_1$-$C_4$)-amino, ou

dans le cas où n est égal à 2

Y représente un radical alkylène en $C_2$-$C_8$, cycloalkylène en $C_5$-$C_{18}$ phénylène, alkylènephényle en $C_8$-$C_{15}$, ou alkylène en $C_4$-$C_{18}$ interrompu par de 1 à 4 atomes d'oxygène ou d'azote,

ou

(b) des dérivés de glycolurile de la formule générale Ib

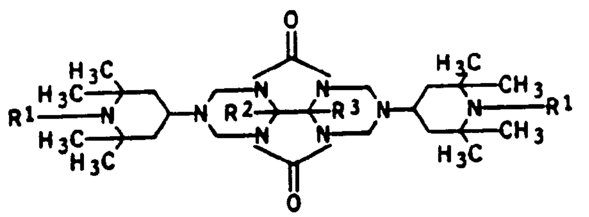

Ib

dans laquelle

$R^2$ et $R^3$ représentent des atomes d'hydrogène, des radicaux alkyle en $C_1$-$C_4$, carbométhoxy, carboéthoxy, benzyle ou phényle,

ou

(c) des esters d'acide mono- ou dicarboxyliques de la formule générale Ic ou Id

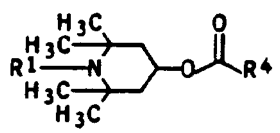

Ic

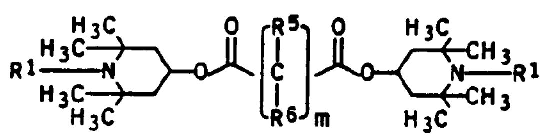

Id

dans lesquelles

$R^4$ représente un radical alkyle en $C_1$-$C_{18}$, qui peut être interrompu par de 1 à 4 atomes d'azote ou d'oxygène, cycloalkyle en $C_3$-$C_{12}$, phényle qui peut ne pas être substitué ou être substitué par des atomes de fluor, de chlore, de brome, des radicaux alkyle en $C_1$-$C_4$, alcoxy en $C_1$-$C_4$, méthylènedioxy ou di-alkyl($C_1$-$C_4$)-amino, ou un radical alkylphényle en $C_7$-$C_{12}$ qui peut complémentairement être substitué sur le noyau phényle par des atomes de fluor, de chlore, de brome, des radicaux alkyle en $C_1$-$C_4$, alcoxy

en $C_1$-$C_4$, méthylènedioxy ou di-alkyl($C_1$-$C_4$)amino,

$R^5$ et $R^6$ représentent des atomes d'hydrogène, des radicaux alkyle en $C_1$-$C_4$ ou alkylphényle en $C_7$-$C_{12}$, où le reste phényle peut complémentairement encore être substitué par des atomes de chlore, de brome, des radicaux alkyle en $C_1$-$C_4$, hydroxyle ou cyano et

m a une valeur qui varie de 1 à 12

et les composés Id peuvent se présenter sous forme polymérique.

3. Teintures à bois suivant la revendication 1 ou 2, qui contiennent complémentairement un ou plusieurs agents d'absorption des UV, qui appartiennent aux classes des 2-(2'-hydroxyphényl)-benzotriazoles, des 2(2'-hydroxyphényl)-1,3,5-triazines, des 2-hydroxy-benzophénones, de l'imidazole-2-carboxanilide, du diamide de l'acide oxalique, des acrylates à substitution phénylique ou hétéroarylique en position 3 et des dérivés hétérocycliques de l'amidine.

4. Teintures à bois suivant les revendications 1 à 3, qui contiennent, à titre de colorant, un colorant solvant, ou un colorant acide alcoolique, appartenant à chaque fois au groupe des colorants azoïques ou disazoïques.

5. Teintures à bois suivant les revendications 1 à 4, qui contiennent les stabilisateurs uniquement, ou un mélange des stabilisateurs et des agents d'absorption des UV suivant la revendication 3 en une proportion de 0,05 à 10% en poids, par rapport à la quantité totale des teintures à bois.

6. Mélange de stabilisateurs suivant la revendication 1 et d'agents d'absorption des UV suivant la revendication 3, dans le rapport pondéral de 5:1 à 1:5, destiné à la stabilisation du bois traité par des teintures à bois contre l'action de la lumière, de l'oxygène et de la chaleur.

**Revendications pour l'Etat contractant suivant : ES**

1. Procédé de stabilisation du bois contre l'action de la lumière, de l'oxygène et de la chaleur, caractérisé en ce que l'on traite le bois par des teintures à bois qui contiennent, outre un colorant et un solvant, au moins un stabilisateur contre l'action de la lumière, de l'oxygène et de la chaleur sur le bois traité par les teintures à bois, qui contiennent au moins un élément de structure de la formule I

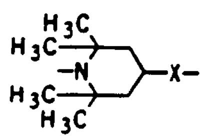

I

dans laquelle X représente un atome d'oxygène ou d'azote.

2. Procédé suivant la revendication 1, caractérisé en ce que l'on utilise, à titre de stabilisateurs,
(a) des dérivés de la 4-formylaminopipéridine de la formule générale Ia

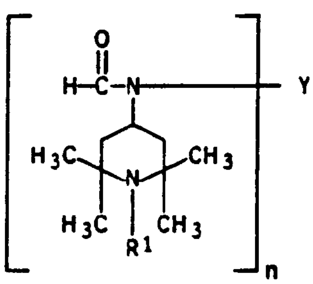

Ia

dans laquelle

n est égal à 1 ou à 2,

$R^1$ représente un atome d'hydrogène, un radical alkyle en $C_1$-$C_4$, allyle, hydroxyméthyle, β-hydroxyéthyle, acyle en $C_1$-$C_4$, benzoyle ou benzyle et au cas où n est égal à 1,

Y représente un radical alkyle en $C_1$-$C_{18}$, qui peut être interrompu par de 1 à 4 atomes d'azote

ou d'oxygène, un radical cycloalkyle en $C_3$-$C_{12}$, un radical phényle qui peut ne pas être substitué ou être substitué par des atomes de fluor, de chlore, de brome, des radicaux alkyle en $C_1$-$C_4$, alcoxy en $C_1$-$C_4$, méthylènedioxy ou di-alkyl($C_1$-$C_4$)-amino, un reste de la formule

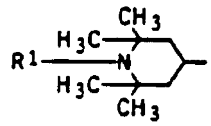

ou un radical alkylphényle en $C_7$-$C_{12}$, qui peut complémentairement être substitué sur le noyau phényle par des atomes de fluor, de chlore, de brome, des radicaux alkyle en $C_1$-$C_4$, alcoxy en $C_1$-$C_4$, méthylènedioxy, ou di-alkyl(C1-$C_4$)-amino, ou

dans le cas où n est égal à 2

Y représente un radical alkylène en $C_2$-$C_8$, cycloalkylène en $C_5$-$C_{18}$, phénylène, alkylènephényle en $C_8$-$C_{15}$, ou alkylène en $C_4$-$C_{18}$ interrompu par de 1 à 4 atomes d'oxygène ou d'azote,

ou

(b) des dérivés de glycolurile de la formule générale Ib

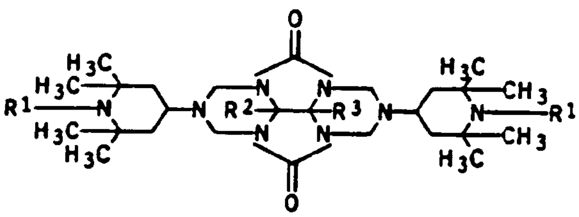

Ib

dans laquelle

$R^2$ et $R^3$ représentent des atomes d'hydrogène, des radicaux alkyle en $C_1$-$C_4$, carbométhoxy, carboéthoxy, benzyle ou phényle,

ou

(c) des esters d'acide mono- ou dicarboxyliques de la formule générale Ic ou Id

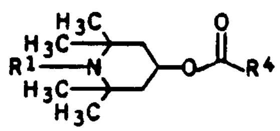

Ic

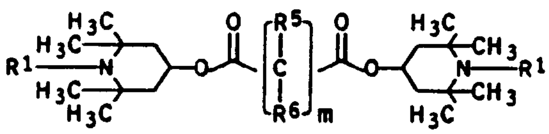

Id

dans lesquelles

$R^4$ représente un radical alkyle en $C_1$-$C_{18}$, qui peut être interrompu par de 1 à 4 atomes d'azote ou d'oxygène, cycloalkyle en $C_3$-$C_{12}$, phényle qui peut ne pas être substitué ou être substitué par des atomes de fluor, de chlore, de brome, des radicaux alkyle en $C_1$-$C_4$, alcoxy en $C_1$-$C_4$, méthylènedioxy ou di-alkyl($C_1$-$C_4$)-amino, ou un radical alkylphényle en $C_7$-$C_{12}$ qui peut complémentairement être substitué sur le noyau phényle par des atomes de fluor, de chlore, de brome, des radicaux alkyle en $C_1$-$C_4$, alcoxy en $C_1$-$C_4$, méthylènedioxy ou di-alkyl($C_1$-$C_4$)amino,

$R^5$ et $R^6$ représentent des atomes d'hydrogène, des radicaux alkyle en $C_1$-$C_4$ ou alkylphényle en $C_7$-$C_{12}$, où le reste phényle peut complémentairement encore être substitué par des atomes de chlore, de brome, des radicaux alkyle en $C_1$-$C_4$, hydroxyle ou cyano et

m a une valeur qui varie de 1 à 12

et les composés Id peuvent se présenter sous forme polymérique.

3. Procédé suivant la revendication 1 ou 2, caractérisé en ce que l'on utilise complémentairement un ou plusieurs agents d'absorption des UV, qui appartiennent aux classes des 2-(2'-hydroxyphényl)-benzotriazoles, des 2(2'-hydroxyphényl)-1,3,5-triazines, des 2-hydroxybenzophénones, de l'imidazole-2-carboxanilide, du diamide de l'acide oxalique, des acrylates à substitution phénylique ou hétéroarylique en position 3 et des dérivés hétérocycliques de l'amidine.

4. Procédé suivant les revendications 1 à 3, caractérisé en ce que l'on utilise à titre de colorant, un colorant solvant ou un colorant acide alcoolique, appartenant à chaque fois au groupe des colorants azoïques ou disazoïques.

5. Procédé suivant les revendications 1 à 4, caractérisé en ce que l'on utilise les stabilisateurs seuls, ou un mélange des stabilisateurs et des agents d'absorption des UV suivant la revendication 3, en une proportion de 0,05 à 10% en poids, par rapport à la quantité totale des teintures à bois.

6. Procédé suviant la revendication 1, caractérisé en ce que l'on utilise un mélange des stabilisateurs et des agents d'absorption des UV suivant la revendication 3 dans le rapport pondéral de 5:1 à 1:5.